# EUROPEAN PATENT APPLICATION

(11) **EP 3 211 535 A1**
(43) Date of publication of application: **30.08.2017**
(21) Application number: 15908487.0
(22) Date of filing: 17.12.2015
(51) Int. Cl.: G06F 12/1045

(54) **WRITE REQUEST PROCESSING METHOD, PROCESSOR AND COMPUTER**

(71) Applicant: Huawei Technologies Co., Ltd., Longgang District Shenzhen, Guangdong 518129 (CN)
(72) Inventor: YAN, Chunbao, Shenzhen Guangdong 518129 (CN); ZHANG, Yu, Shenzhen Guangdong 518129 (CN); ZHENG, Wei, Shenzhen Guangdong 518129 (CN)
(74) Representative: Kreuz, Georg Maria
(86) International application number: PCT/CN2015/097742
(87) International publication number: WO 2017/101080

(57) **Abstract**

Embodiments of the present invention provide a write request processing method, a processor, and a computer. A first computer is connected to a second computer, respective operating systems run on the first computer and the second computer respectively, the first computer includes a first processor, the first processor is connected to a second processor of the second computer by using a system bus, the first computer includes a first memory address space, a second memory address space of the second computer is a mirror address space of the first memory address space, and the first processor mirrors data written into the first memory address space to the second memory address space by using the system bus, which can reduce mirroring operation latency and improves IOPS performance of a system.

## Description

### TECHNICAL FIELD

Embodiments of the present invention relate to the field of computers, and more specifically, to a write request processing method, a processor, and a computer.

### BACKGROUND

A cluster computer system generally consists of multiple computers, respective operating systems run on the multiple computers respectively, and the multiple computers can work independently. The multiple computers are interconnected by using an input/output (Input Output, IO) bus such as an Ethernet bus, a Peripheral Component Interconnect Express (Peripheral Component Interface Express, PCIe) bus, or an Infiniband bus, which can implement communication and data exchange between the computers.

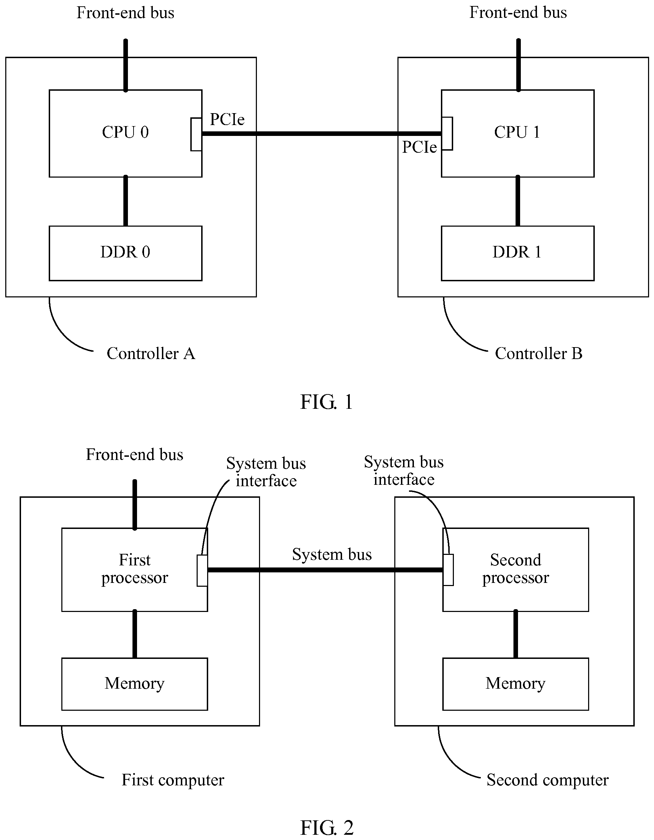

The cluster computer system is widely used in the field of high-end storage. For example, for each high-end storage device, a dual-controller or multi-controller storage area network (Storage Area Network, SAN) system is generally used, and each controller in the dual-controller or multi-controller SAN system may be viewed as an independent computer. A respective operating system runs on each controller, and a respective memory is disposed on each controller. The controllers are interconnected by using an IO bus, forming the cluster computer system. The dual-controller or multi-controller SAN system used in the high-end storage device can ensure data storage reliability. With reference to FIG. 1, the following provides detailed descriptions by using a dual-controller SAN system based on PCIe interconnection as an example.

As shown in FIG. 1, the dual-controller SAN system includes a controller A and a controller B, where both the controller A and the controller B include a CPU, a DDR, and a front-end bus, and respective operating systems run on the controller A and the controller B respectively. The controller A is connected to the controller B by using a PCIe bus, and domain address conversion and data exchange are implemented between two computers by using a PCIe non-transparent bridge (Non-Transparent Bridge, NTB).

When the controller A receives, by using the front-end bus, an external write request (which may also be referred to as write IO or a write IO request) used to store data, a CPU 0 of the controller A first writes the data into a DDR 0. Then, the CPU 0 reads the data from the DDR 0, encapsulates the data into data that satisfies a PCIe format, and sends data obtained by means of encapsulation to the controller B by using a mirror channel between the two controllers that is formed by using a PCIe bus. A CPU 1 of the controller B obtains the data by means of decapsulation and then writes the data into a DDR 1.

The foregoing is an entire mirroring operation process in the dual-controller SAN system. Such a mirroring operation is equivalent to backing, in the controller B, up data in the controller A. When a fatal error occurs on the controller A and a breakdown is caused, the controller B can still work normally, and that data in a memory of the controller A is lost due to the breakdown of the controller A is avoided. In this case, the entire system can still run and work normally, improving reliability of a storage device. However, it can be seen, from the mirroring process described above, that during the entire mirroring operation, a direct memory access (Directional Memory Access, DMA) operation needs to be performed twice (for the first time, reading data from the DDR 0, and for the second time, writing data into the DDR 1). In addition, an IO access between devices interconnected under a PCIe (Ethernet, Infiniband, or the like) network protocol is bound to bring a large quantity of software protocol overheads (for example, data encapsulation and decapsulation), which causes high mirroring operation latency and relatively poor read/write operations per second (Input/Output Operations Per Second, IOPS) performance of the system.

### SUMMARY

Embodiments of the present invention provide a write request processing method and apparatus, and a computer, which can reduce data mirroring operation latency in a cluster computer system and improve IOPS of the system.

According to a first aspect, a write request processing method is provided, where the method is applied to a first computer, the first computer is connected to a second computer, respective operating systems run on the first computer and the second computer respectively, the first computer includes a first processor, the second computer includes a second processor, both the first processor and the second processor include a system bus interface, and the system bus interface of the first processor is connected to the system bus interface of the second processor by using a system bus; and the method includes: receiving, by the first processor, a write request, where the write request includes to-be-written target data and a write address of the target data; determining, by the first processor, that the write address is located in a first memory address space; and writing, by the first processor, the target data in the write request into the first memory address space, and sending the target data in the write request to a second processor by using the system bus.

Processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

With reference to the first aspect, in an implementation manner of the first aspect, the sending, by the first processor, the target data in the write request to the second processor by using the system bus includes: generating, by the first processor, a mirror packet according to the write request, where the mirror packet includes the target data and the write address; sending, by the first processor, the mirror packet to a non-transparent bridge of the first processor; converting, by the non-transparent bridge of the first processor, the write address in the mirror packet to a mirror address, of the write address, in the second memory address space according to a mirror relationship between the first memory address space and the second memory address space, to obtain an updated mirror packet; and sending, by the non-transparent bridge of the first processor, the updated mirror packet to a non-transparent bridge of the second processor by using the system bus, so that the second processor writes the target data into the mirror address according to the updated mirror packet received by the non-transparent bridge of the second processor.

Non-transparent bridges are used to convert an address in a mirror packet, which can simplify implementation of an internal component inside a processor, further reducing mirroring operation latency and improving IOPS performance of a system.

With reference to the first aspect or any one of the foregoing implementation manners of the first aspect, in another implementation manner of the first aspect, the method further includes: sending, by the non-transparent bridge of the first processor, a mirror completion packet to the first processor after the non-transparent bridge of the first processor receives the mirror completion packet from the second processor within a preset time, where the mirror completion packet is corresponding to the mirror packet and is used to indicate that the target data has been written into the mirror address; and confirming, by the first processor, a success of a mirroring operation for the target data according to the mirror completion packet, and terminating a mirror transaction corresponding to the mirroring operation.

With reference to the first aspect or any one of the foregoing implementation manners of the first aspect, in another implementation manner of the first aspect, the method further includes: sending, by the non-transparent bridge of the first processor, a mirror timeout packet to the first processor when the non-transparent bridge of the first processor does not receive the mirror completion packet from the second processor within the preset time; and confirming, by the first processor, a failure of the mirroring operation according to the mirror timeout packet, and terminating the mirror transaction.

A complete procedure of processing a mirror transaction or mirror-related packet is designed, so that the mirror transaction can be terminated regardless of a success or failure of a mirroring operation, which avoids a problem of a breakdown caused by an error during an operation on a system bus and enhances system robustness.

With reference to the first aspect or any one of the foregoing implementation manners of the first aspect, in another implementation manner of the first aspect, the sending, by the first processor, the target data in the write request to the second processor by using the system bus includes: generating, by the first processor, a mirror packet according to the write request, where the mirror packet includes the target data and the write address; and sending, by the first processor, the mirror packet to a non-transparent bridge of the first processor, where the non-transparent bridge of the first processor sends the mirror packet to a non-transparent bridge of the second processor by using the system bus, so that the non-transparent bridge of the second processor converts the write address in the mirror packet to a mirror address, of the write address, in the second memory address space, to obtain an updated mirror packet, and the second processor writes the target data into the mirror address according to the updated mirror packet.

Non-transparent bridges are used to convert a mirror packet and an address in the mirror packet, which can simplify internal implementation of a processor, further reducing mirroring operation latency and improving IOPS performance of a system.

With reference to the first aspect or any one of the foregoing implementation manners of the first aspect, in another implementation manner of the first aspect, the writing, by the first processor, the target data in the write request into the first memory address space includes: generating, by the first processor, a write packet for the target data according to the write request; and writing, by the first processor, the target data into the write address in the first memory address space according to the write packet.

With reference to the first aspect or any one of the foregoing implementation manners of the first aspect, in another implementation manner of the first aspect, the system bus is a QPI bus or an HT bus.

With reference to the first aspect or any one of the foregoing implementation manners of the first aspect, in another implementation manner of the first aspect, the second memory address space of the second computer is a mirror address space of the first memory address space of the first computer.

With reference to the first aspect or any one of the foregoing implementation manners of the first aspect, in another implementation manner of the first aspect, the first processor sends the target data in the write request to the second processor by using the system bus, so that the second processor writes the target data into the second memory address space.

According to a second aspect, a write request processing method is provided, where the method is applied to a second computer connected to a first computer, respective operating systems run on the first computer and the second computer respectively, the first computer includes a first processor, the second computer includes a second processor, both the first processor and the second processor include a system bus interface, the system bus interface of the first processor is connected to the system bus interface of the second processor by using a system bus, and a second memory address space of the second computer is a mirror address space of a first memory address space of the first computer; and the method includes: receiving, by the second processor, target data from the first processor by using the system bus, where the target data is data to be written into a memory of the first processor, and a write address of the target data is located in the first memory address space; and writing, by the second processor, the target data into the second memory address space. Processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

With reference to the second aspect, in an implementation manner of the second aspect, the receiving, by the second processor, target data from the first processor by using the system bus includes: receiving, by a non-transparent bridge of the second processor, a mirror packet from the first processor by using the system bus, where the mirror packet includes the target data and a mirror address, of the write address, in the second memory address space; and the writing, by the second processor, the target data into the second memory address space includes: converting, by the non-transparent bridge of the second processor, the mirror packet to a write packet for the target data; and writing, by the non-transparent bridge of the second processor, the write packet into the mirror address in the second memory address space by using a memory controller of the second computer.

Non-transparent bridges are used to complete packet type or format conversion, which can simplify internal implementation of a processor, further reducing mirroring operation latency and improving IOPS performance of a system.

With reference to the second aspect or any one of the foregoing implementation manners of the second aspect, in another implementation manner of the second aspect, the method further includes:
receiving, by the non-transparent bridge of the second processor, from the memory controller, a write completion packet corresponding to the write packet, where the write completion packet includes the mirror address; converting, by the non-transparent bridge of the second processor, the mirror address to the write address according to a mapping relationship between the first memory address space and the second memory address space; and sending, by the non-transparent bridge of the second processor, a mirror completion packet corresponding to the mirror packet to the first processor, where the mirror completion packet includes the write address, and the mirror completion packet is used to indicate that the target data has been written into the mirror address.

With reference to the second aspect or any one of the foregoing implementation manners of the second aspect, in another implementation manner of the second aspect, the receiving, by the second processor, target data from the first processor by using the system bus includes: receiving, by a non-transparent bridge of the second processor, a mirror packet from the first processor by using the system bus, where the mirror packet includes the target data and the write address; and the writing, by the second processor, the target data into the second memory address space includes: converting, by the non-transparent bridge of the second processor, the mirror packet to a write packet for the target data, and converting the write address to a mirror address, of the write address, in the second memory address space; and writing, by the non-transparent bridge of the second processor, the write packet into the mirror address in the second memory address space by using a memory controller of the second computer.

With reference to the second aspect or any one of the foregoing implementation manners of the second aspect, in another implementation manner of the second aspect, the system bus is a QPI bus or an HT bus.

According to a third aspect, a processor is provided, where the processor is located in a first computer, the first computer is connected to a second computer, respective operating systems run on the first computer and the second computer respectively, the second computer includes another processor, both the processor and the another processor include a system bus interface, the system bus interface of the processor is connected to the system bus interface of the another processor by using a system bus, the processor further includes a controller and an internal bus, and the controller is connected to the system bus interface of the processor by using the internal bus; and the controller is configured to receive a write request, where the write request includes to-be-written target data and a write address of the target data; determine that the write address is located in the first memory address space; and write the target data in the write request into the first memory address space, and send the target data in the write request to the another processor by using the system bus.

Processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

With reference to the third aspect, in an implementation manner of the third aspect, the processor further includes a non-transparent bridge, where the non-transparent bridge is connected to the system bus interface, and the non-transparent bridge is connected to the controller by using the internal bus; the controller is specifically configured to generate a mirror packet according to the write request, where the mirror packet includes the target data and the write address; and send the mirror packet to the non-transparent bridge; and the non-transparent bridge is configured to convert the write address in the mirror packet to a mirror address, of the write address, in the second memory address space according to a mirror relationship between the first memory address space and the second memory address space, to obtain an updated mirror packet; and send the updated mirror packet to a non-transparent bridge of the another processor by using the system bus, so that the another processor writes the target data into the mirror address according to the updated mirror packet received by the non-transparent bridge of the another processor.

Non-transparent bridges are used to convert an address in a mirror packet, which can simplify internal implementation of a processor, further reducing mirroring operation latency and improving IOPS performance of a system.

With reference to the third aspect or any one of the foregoing implementation manners of the third aspect, in another implementation manner of the third aspect, the non-transparent bridge is further configured to send a mirror completion packet to the controller after receiving the mirror completion packet from the another processor within a preset time, where the mirror completion packet is corresponding to the mirror packet and is used to indicate that the target data has been written into the mirror address; and the controller is further configured to confirm a success of a mirroring operation for the target data according to the mirror completion packet, and terminate a mirror transaction corresponding to the mirroring operation.

With reference to the third aspect or any one of the foregoing implementation manners of the third aspect, in another implementation manner of the third aspect, the non-transparent bridge is further configured to send a mirror timeout packet to the first processor when the mirror completion packet is not received from the another processor within the preset time; and the controller is further configured to confirm a failure of the mirroring operation according to the mirror timeout packet, and terminate the mirror transaction.

A complete procedure of processing a mirror transaction or mirror-related packet is designed, so that the mirror transaction can be terminated regardless of a success or failure of a mirroring operation, which avoids a problem of a breakdown caused by an error during an operation on a system bus and enhances system robustness.

With reference to the third aspect or any one of the foregoing implementation manners of the third aspect, in another implementation manner of the third aspect, the controller is specifically configured to generate a mirror packet according to the write request, where the mirror packet includes the target data and the write address; and send the mirror packet to a non-transparent bridge of the processor, where the non-transparent bridge of the processor sends the mirror packet to a non-transparent bridge of the another processor by using the system bus, so that the non-transparent bridge of the another processor converts the write address in the mirror packet to a mirror address, of the write address, in the second memory address space, to obtain an updated mirror packet, and the another processor writes the target data into the mirror address according to the updated mirror packet.

Non-transparent bridges are used to convert a mirror packet and an address in the mirror packet, which can simplify internal implementation of a processor, further reducing mirroring operation latency and improving IOPS performance of a system.

With reference to the third aspect or any one of the foregoing implementation manners of the third aspect, in another implementation manner of the third aspect, the controller is specifically configured to generate a write packet for the target data according to the write request; and write the target data into the write address in the first memory address space according to the write packet. With reference to the third aspect or any one of the foregoing implementation manners of the third aspect, in another implementation manner of the third aspect, the system bus is a QPI bus or an HT bus.

With reference to the third aspect or any one of the foregoing implementation manners of the third aspect, in another implementation manner of the third aspect, the second memory address space of the second computer is a mirror address space of the first memory address space of the first computer.

With reference to the third aspect or any one of the foregoing implementation manners of the third aspect, in another implementation manner of the third aspect, the processor sends the target data in the write request to the another processor by using the system bus, so that the another processor writes the target data into the second memory address space.

According to a fourth aspect, a processor is provided, where the processor is located in a second computer connected to a first computer, respective operating systems run on the first computer and the second computer respectively, the first computer includes another processor, both the another processor and the processor include a system bus interface, the system bus interface of the another processor is connected to the system bus interface of the processor by using a system bus, a second memory address space of the second computer is a mirror address space of a first memory address space of the first computer, the processor includes a controller, a non-transparent bridge, and an internal bus, the non-transparent bridge is connected to the system bus interface of the processor, and the controller is connected to the non-transparent bridge by using the internal bus; and the non-transparent bridge is configured to receive target data from the another processor by using the system bus, where the target data is data to be written into a memory of the another processor, and a write address of the target data is located in the first memory address space; and write the target data into the second memory address space.

Processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

With reference to the fourth aspect, in an implementation manner of the fourth aspect, the non-transparent bridge is specifically configured to receive a mirror packet from the another processor by using the system bus, where the mirror packet includes the target data and a mirror address, of the write address, in the second memory address space; convert the mirror packet to a write packet for the target data; and write the write packet into the mirror address in the second memory address space by using a memory controller of the second computer.

Non-transparent bridges are used to complete packet type or format conversion, which can simplify internal implementation of a processor, further reducing mirroring operation latency and improving IOPS performance of a system.

With reference to the fourth aspect or any one of the foregoing implementation manners of the fourth aspect, in another implementation manner of the fourth aspect, the non-transparent bridge is further configured to receive, from the memory controller, a write completion packet corresponding to the write packet, where the write completion packet includes the mirror address; convert the mirror address to the write address according to a mapping relationship between the first memory address space and the second memory address space; and send, to the another processor, a mirror completion packet corresponding to the mirror packet, where the mirror completion packet includes the write address, and the mirror completion packet is used to indicate that the target data has been written into the mirror address.

With reference to the fourth aspect or any one of the foregoing implementation manners of the fourth aspect, in another implementation manner of the fourth aspect, the non-transparent bridge is specifically configured to receive a mirror packet from the another processor by using the system bus, where the mirror packet includes the target data and the write address; convert the mirror packet to a write packet for the target data, and convert the write address to a mirror address, of the write address, in the second memory address space; and write the write packet into the mirror address in the second memory address space by using a memory controller of the second computer. With reference to the fourth aspect or any one of the foregoing implementation manners of the fourth aspect, in another implementation manner of the fourth aspect, the system bus is a QPI bus or an HT bus.

According to a fifth aspect, a computer is provided, where the computer is connected to another computer, respective operating systems run on the computer and the another computer respectively, the computer includes a first processor, the another computer includes a second processor, both the first processor and the second processor include a system bus interface, and the system bus interface of the first processor is connected to the system bus interface of the second processor by using a system bus; and the computer includes: a receiving module, configured to receive a write request, where the write request includes to-be-written target data and a write address of the target data; a determining module, configured to determine that the write address is located in the first memory address space; and a mirroring module, configured to write the target data in the write request into the first memory address space, and send the target data in the write request to the second processor by using the system bus.

Processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

With reference to the fifth aspect, in an implementation manner of the fifth aspect, the mirroring module is specifically configured to generate a mirror packet according to the write request, where the mirror packet includes the target data and the write address; send the mirror packet to a non-transparent bridge of the first processor; convert the write address in the mirror packet to a mirror address, of the write address, in the second memory address space according to a mirror relationship between the first memory address space and the second memory address space, to obtain an updated mirror packet; and send the updated mirror packet to a non-transparent bridge of the second processor by using the system bus, so that the second processor writes the target data into the mirror address according to the updated mirror packet received by the non-transparent bridge of the second processor.

Non-transparent bridges are used to convert an address in a mirror packet, which can simplify internal implementation of a processor, further reducing mirroring operation latency and improving IOPS performance of a system.

With reference to the fifth aspect or any one of the foregoing implementation manners of the fifth aspect, in another implementation manner of the fifth aspect, the mirroring module is further configured to: send a mirror completion packet to the first processor after the non-transparent bridge of the first processor receives the mirror completion packet from the second processor within a preset time, where the mirror completion packet is corresponding to the mirror packet and is used to indicate that the target data has been written into the mirror address; and confirm a success of a mirroring operation for the target data according to the mirror completion packet, and terminate a mirror transaction corresponding to the mirroring operation.

With reference to the fifth aspect or any one of the foregoing implementation manners of the fifth aspect, in another implementation manner of the fifth aspect, the mirroring module is further configured to: send a mirror timeout packet to the first processor when the non-transparent bridge of the first processor does not receive the mirror completion packet from the second processor within the preset time; and confirm a failure of the mirroring operation according to the mirror timeout packet, and terminate the mirror transaction.

A complete procedure of processing a mirror transaction or mirror-related packet is designed, so that the mirror transaction can be terminated regardless of a success or failure of a mirroring operation, which avoids a problem of a breakdown caused by an error during an operation on a system bus and enhances system robustness.

With reference to the fifth aspect or any one of the foregoing implementation manners of the fifth aspect, in another implementation manner of the fifth aspect, the mirroring module is further configured to generate a mirror packet according to the write request, where the mirror packet includes the target data and the write address; and send the mirror packet to a non-transparent bridge of the first processor, where the non-transparent bridge of the first processor sends the mirror packet to a non-transparent bridge of the second processor by using the system bus, so that the non-transparent bridge of the second processor converts the write address in the mirror packet to a mirror address, of the write address, in the second memory address space, to obtain an updated mirror packet, and the second processor writes the target data into the mirror address according to the updated mirror packet.

Non-transparent bridges are used to convert a mirror packet and an address in the mirror packet, which can simplify internal implementation of a processor, further reducing mirroring operation latency and improving IOPS performance of a system.

With reference to the fifth aspect or any one of the foregoing implementation manners of the fifth aspect, in another implementation manner of the fifth aspect, the mirroring module is specifically configured to generate a write packet for the target data according to the write request; and write the target data into the write address in the first memory address space according to the write packet. With reference to the fifth aspect or any one of the foregoing implementation manners of the fifth aspect, in another implementation manner of the fifth aspect, the system bus is a QPI bus or an HT bus.

With reference to the fifth aspect or any one of the foregoing implementation manners of the fifth aspect, in another implementation manner of the fifth aspect, the second memory address space of the another computer is a mirror address space of the first memory address space of the computer. With reference to the fifth aspect or any one of the foregoing implementation manners of the fifth aspect, in another implementation manner of the fifth aspect, the mirroring module sends the target data in the write request to the second processor by using the system bus, so that the second processor writes the target data into the second memory address space.

According to a sixth aspect, a computer is provided, where the computer is connected to another computer, respective operating systems run on the another computer and the computer respectively, the another computer includes a first processor, the computer includes a second processor, both the first processor and the second processor include a system bus interface, the system bus interface of the first processor is connected to the system bus interface of the second processor by using a system bus, and a second memory address space of the computer is a mirror address space of a first memory address space of the another computer; and the computer includes: a mirroring module, configured to receive target data from the first processor by using the system bus, where the target data is data to be written into a memory of the first processor, and a write address of the target data is located in the first memory address space; and a write operation module, configured to write the target data into the second memory address space.

Processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

With reference to the sixth aspect, in an implementation manner of the sixth aspect, the mirroring module is specifically configured to receive a mirror packet from the first processor by using the system bus, where the mirror packet includes the target data and a mirror address, of the write address, in the second memory address space; and the write operation module is specifically configured to convert the mirror packet to a write packet for the target data, and write the write packet into the mirror address in the second memory address space by using a memory controller of the computer.

Non-transparent bridges are used to complete packet type or format conversion, which can simplify internal implementation of a processor, further reducing mirroring operation latency and improving IOPS performance of a system.

With reference to the sixth aspect or any one of the foregoing implementation manners of the sixth aspect, in another implementation manner of the sixth aspect, the mirroring module is further configured to receive, from the memory controller, a write completion packet corresponding to the write packet, where the write completion packet includes the mirror address; convert the mirror address to the write address according to a mapping relationship between the first memory address space and the second memory address space; and send, to the first processor, a mirror completion packet corresponding to the mirror packet, where the mirror completion packet includes the write address, and the mirror completion packet is used to indicate that the target data has been written into the mirror address.

With reference to the sixth aspect or any one of the foregoing implementation manners of the sixth aspect, in another implementation manner of the sixth aspect, the mirroring module is specifically configured to receive a mirror packet from the first processor by using the system bus, where the mirror packet includes the target data and the write address; and the write operation module is specifically configured to convert the mirror packet to a write packet for the target data, and convert the write address to a mirror address, of the write address, in the second memory address space; and write the write packet into the mirror address in the second memory address space by using a memory controller of the computer.

With reference to the sixth aspect or any one of the foregoing implementation manners of the sixth aspect, in another implementation manner of the sixth aspect, the system bus is a QPI bus or an HT bus.

In the prior art, a system bus is generally used to implement a connection of functional components inside a computer, and the system bus is one of internal buses of the computer and has features of high bandwidth and low latency. In the embodiments of the present invention, a system bus is used to connect processors of two different computers together. The system bus is used to implement a mirroring operation of to-be-written data, without requiring multiple DMA operations like that in the prior art or without complex protocol-based conversion, which reduces mirroring operation latency and improves IOPS performance of a system.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a connection in an existing cluster computer system;
FIG. 2 is a schematic diagram of a connection in a computer system according to an embodiment of the present invention;
FIG. 3 is a schematic flowchart of a write request processing method according to an embodiment of the present invention;
FIG. 4 is a schematic structural diagram of a CPU based on a QPI technology;
FIG. 5 is a schematic flowchart of a data mirroring operation according to an embodiment of the present invention;
FIG. 6 is a schematic flowchart of a data mirroring operation according to an embodiment of the present invention;
FIG. 7 is a schematic flowchart of a write request processing method according to an embodiment of the present invention;
FIG. 8 is a schematic structural diagram of a processor according to an embodiment of the present invention;
FIG. 9 is a schematic structural diagram of a processor according to an embodiment of the present invention;
FIG. 10 is a schematic structural diagram of a computer according to an embodiment of the present invention; and
FIG. 11 is a schematic structural diagram of a computer according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

A cluster computer system generally includes multiple computers, where the multiple computers are interconnected together in a given manner, a respective operating system runs on each computer independently, and mutual communication and data exchange can be performed between the computers. To ensure data storage reliability of the cluster computer system, a computer in the cluster computer system (hereinafter referred to as a first computer) mirrors data to be written into a memory (hereinafter referred to as target data) to a memory of another computer (hereinafter referred to as a second computer) by means of a mirroring operation, which is equivalent to that the data in the memory of the first computer is backed up in the second computer. When the first computer breaks down due to a reason, the data in the memory of the first computer still has a backup in the second computer, which does not cause a loss of the data in the memory and improves data storage reliability.

It should be understood that the first computer and/or the second computer described above may be a device or node that includes a processor and a memory and on which an operating system runs independently. In the embodiments of the present invention, the first computer and/or the second computer is only for ease of description and distinguishing and shall not be understood as a limitation on the embodiments of the present invention. Specifically, in a different application scenario, the first computer and/or the second computer may correspond to a different device or node. For example, in the general field of cluster computer systems, for example, the field of communications or servers, a computer may be a host (host); in the field of storage devices, for example, the field of dual-controller or multi-controller SANs, a computer may be a controller.

It should be further understood that a computer in a cluster system is used as an example for description in this specification. In practice, the write request processing method provided in the embodiments of the present invention can be used provided that processors inside two independent computers are connected by using a system bus.

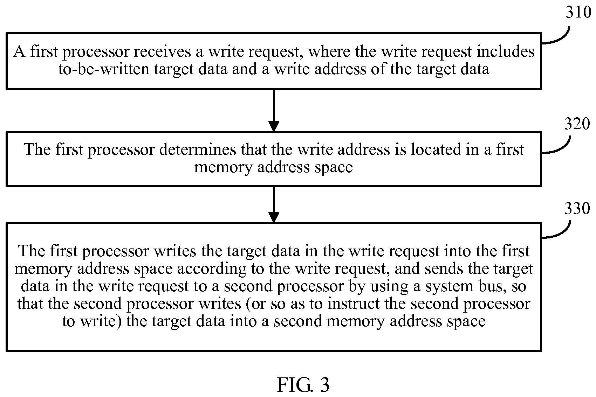

In the prior art, computers in a cluster computer system are connected by using an IO bus such as a PCIe bus, an Ethernet bus, or an Infiniband bus. As described above, a data mirroring operation performed between the computers by using the IO bus not only involves multiple DMA operations but also involves complex software protocol overheads. For example, the first computer needs to extract target data from a memory, encapsulates the target data into a packet that meets a protocol such as the PCIe protocol, the Ethernet protocol, or the Infiniband protocol, and sends the packet to the second computer; the second computer needs to decapsulate the packet and writes the target data into a memory of the second computer. As a result, mirroring operation efficiency is relatively low. To improve efficiency of a data mirroring operation between computers in a cluster computer system, in the embodiments of the present invention, a system bus is used to directly connect processors of two or more computers in a cluster computer system, and a set of data mirroring operation procedures that are suitable be completed on the system bus can be designed on this basis. The following provides detailed descriptions with reference to FIG. 2 and FIG. 3.

FIG. 2 is a schematic diagram of a connection in a computer system according to an embodiment of the present invention. In FIG. 2, a first computer and a second computer may be two computers in the cluster computer system. Respective operating systems independently run on the two computers respectively. Both processors (a first processor and a second processor in FIG. 2) of the two computers include a system bus interface, and the processors are connected together by using a system bus in a manner similar to "loose coupling". In addition, at least a part of a memory address space (hereinafter referred to as a second memory address space) of the second computer is a mirror address space of at least a part of a memory address space (hereinafter referred to as a first memory address space) of the first computer. On a basis of a connection relationship and a configuration shown in FIG. 2, with reference to FIG. 3, the following describes in detail a write request processing method in a cluster computer system according to an embodiment of the present invention.

FIG. 3 is a schematic flowchart of a write request processing method according to an embodiment of the present invention. The method in FIG. 3 may be executed by the first processor in FIG. 2. The method in FIG. 3 includes:
310: The first processor receives a write request, where the write request includes to-be-written target data and a write address of the target data.
320: The first processor determines that the write address is located in a first memory address space.
330: The first processor writes the target data in the write request into the first memory address space according to the write request, and sends the target data in the write request to a second processor by using a system bus, so that the second processor writes (or so as to instruct the second processor to write) the target data into a second memory address space.

In an embodiment, the first processor may directly write the target data into the first memory address space; in another embodiment, the first processor may write the target data into the first memory address space by using a memory controller.

It should be understood that this embodiment of the present invention imposes no specific limitation on an operating sequence of writing the target data into the first memory address space by the first processor and sending the target data to the second processor by the first processor by using the system bus, which may be performed at the same time, or may be performed successively.

In the prior art, a system bus is generally used to implement a connection of functional components inside a computer, and the system bus is one of internal buses of the computer and has features of high bandwidth and low latency. In this embodiment of the present invention, processors that respectively belong to two different computers are connected in a cluster computer system together by using a system bus. The system bus is used to implement a mirroring operation of to-be-written data, without requiring multiple DMA operations like that in the prior art or without complex protocol-based conversion, which reduces mirroring operation latency and improves IOPS performance of a system. Specifically, in the prior art, an IO device is used to transport a mirror packet between two computers. Therefore, mirror data (corresponding to the foregoing target data) needs to be taken out of a memory first; then, the target data is sent to the IO device (using a network adapter as an example); next, the network adapter encapsulates the mirror data into a packet by using a software driver of the network adapter and sends the packet to a receive end; the receive end decapsulates the packet after receiving the packet, and then writes the packet into a memory of the receive end. In the entire process, multiple memory read and write operations are required, and complex protocol-based encapsulation and decapsulation are involved. In this embodiment of the present invention, the target data is directly sent by the first processor to the second processor by using the system bus, which eliminates a process of reading the data from the memory. In addition, although the target data may also be encapsulated in a packet (for example, a mirror packet described in the following) and be sent by using the system bus, the system bus is one of internal buses, and an encapsulation form of a packet used on the system bus may also be designed to be relatively simple. For example, a data write packet and a data mirror packet may be distinguished by changing some fields in the write packet, without a need of involving complex protocols and encapsulation forms like an IO device (for example, a network adapter).

Optionally, in an embodiment, the processor may include one or more system bus interfaces.

Optionally, in an embodiment, the system bus may be a bus supporting cache coherence (Cache Coherent, CC). For example, the system bus may be referred to as a CC bus. In an embodiment, the system bus may be at least one of a HyperTransport (HyperTransport, HT) bus or a quick path interconnect (Quick Path Interconnect, QPI) bus.

Optionally, in an embodiment, the method shown in FIG. 3 may be applied to the field of storage devices. In the field of storage devices, a cluster computer system may be a dual-controller or multi-controller system. Either computer of the first computer and the second computer is equivalent to a controller in the field of storage devices.

The first memory address space may be a part of a memory address space of the first computer, and the second memory address space may be a part of a memory address space of the second computer. In an embodiment, the first memory address space may also be a mirror address space of the second memory address space, or the first memory address space and the second memory address space may be mutual mirror address spaces of each other.

The first memory address space and the second memory address space may be spaces in which addresses are consecutive (consecutive address spaces for short), or may be spaces in which addresses are inconsecutive (inconsecutive address spaces for short). In an embodiment, both the first memory address space and the second memory address space are consecutive address spaces, and setting the first memory address space and the second memory address space as the consecutive address spaces can simplify hardware implementation of the system. In an embodiment, space sizes of the first memory address space and the second memory address space may be equal.

Optionally, in an embodiment, the first memory address space and the second memory address space may be cacheable (cacheable) spaces in the memories. In this way, in addition to completing a mirroring operation, the first memory address space and the second memory address space can further resolve a problem about cache coherence between multiple processors.

Optionally, in an embodiment, that the second memory address space is a mirror address space of the first memory address space may indicate: the data written into the first memory address space needs to be written into the second memory address space, or each write operation for the first memory address space needs to be mirrored to the second memory address space. That is, same data is stored in both the first memory address space and the second memory address space, which can ensure security and reliability of data in a cluster computer system.

Optionally, in an embodiment, a mirror relationship between the first memory address space and the second memory address space may be preconfigured. After the preconfiguration, it may be set that the mirror relationship remains static, or is dynamically adjusted. For example, firmware of a processor may be responsible for initialization of a mirror address space, and then processors of two computers send notification packets to each other by using a system bus to notify the peer processor of locations and sizes of respective mirror address spaces; or an out-of-band management system may perform configuration during system initialization, and notify computers of a configuration result. In an embodiment, a mirror relationship between the first memory address space and the second memory address space may be configured or updated (in real time) according to a demand of a cluster computer system. In an embodiment, a success or failure of a configuration of the mirror address space affects whether a mirroring operation can be performed between the computers, but does not affect normal start and running of the computers.

Optionally, as an embodiment, step 330 may include: generating, by the first processor, a write packet for the target data according to the write request; and writing, by the first processor, the target data into the write address in the first memory address space according to the write packet. The packet herein may also be referred to as a message (message).

To implement a mirror function that is based on a system bus and between two computers in a computer system, reference may be made to a concept of a PCIe non-transparent bridge. A non-transparent bridge is disposed between the two systems, address domains of the two systems are separated, and memory address conversion (a memory address of one system is converted to a mirror address, corresponding to the memory address, in the other system) and another mirror-related operation can be completed by using the non-transparent bridge. The following provides detailed descriptions on a specific form of the non-transparent bridge with reference to a specific embodiment.

The non-transparent bridge may be implemented by using hardware, or may be implemented by using software. For example, the non-transparent bridge may be implemented by using a circuit; in this case, the non-transparent bridge may be referred to as a non-transparent bridge circuit. Implementing the non-transparent bridge by using hardware can further improve mirroring operation efficiency and overall IOPS of a system. Specifically, in the prior art, mirror packets are sent by using IO devices (for example, network adapters), and these IO devices process the mirror packets by using respective software drivers. Compared with a hardware-only manner, in a software manner, mirror packet processing efficiency is obviously lower, and latency is higher. The non-transparent bridge may be disposed as special hardware for mirroring operation processing. For example, the non-transparent bridge specially performs address and/or packet type conversion on the mirror packet. The hardware-only implementation manner can further improve mirroring operation efficiency.

For another example, the non-transparent bridge may be implemented by using code; in this case, the non-transparent bridge may be referred to as a non-transparent bridge logic module. The non-transparent bridge is disposed as special hardware for mirroring operation processing, which can reduce a burden of a processor. The following uses an example in which the non-transparent bridge is hardware to describe a location of the non-transparent bridge and a connection relationship between the non-transparent bridge and another component inside the processor.

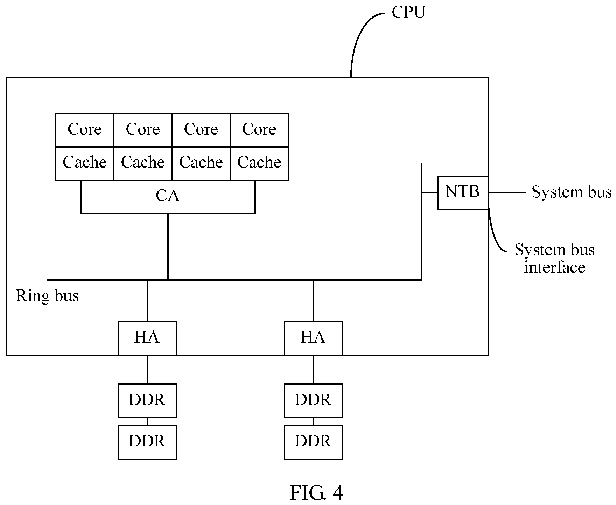

The processor generally includes a controller and an arithmetic unit, where the controller is generally responsible for internal logic control of the processor and overall scheduling, and the arithmetic unit performs data-related integer or floating point arithmetic. To better support a mirror-related operation, a non-transparent bridge may be disposed at a system bus interface of the processor, where the non-transparent bridge may be connected to the controller inside the processor by using an internal bus of the processor. It should be understood that names or types of controllers and internal buses of different types of processors may be different. Referring to FIG. 4, using a processor based on a QPI technology as an example, a controller inside the processor may refer to a cache agent (Cache Agent, CA), a home agent (Home Agent, HA), or the like inside the processor, and components inside the processor are connected by using a ring bus (Ring Bus). Specifically, the CA is a transaction processing engine, inside a CPU, located at a cache end. The HA is a transaction processing engine, inside the CPU, located at a memory controller end and is connected to a DDR. The transaction processing engines inside the CPU are connected by using the ring bus. A packet (message) may be transferred between the engines by using the ring bus according to a specific rule, and a transaction, such as a read transaction or a write transaction, is completed by means of mutual coordination of the engines. For example, after the CPU receives a write request, the CA may be responsible for sending, to the HA, a data write-back packet (WbData) used to request to write data into a memory, so as to request to write data in the write request into the memory, and receiving a response packet (WbCMP) returned by the HA, to indicate completion of a data write operation. Still referring to FIG. 4, the non-transparent bridge (an NTB in FIG. 4) may be disposed at a system bus interface, where one end is connected to the system bus interface, and the other end is connected to an internal bus of the CPU. In this way, the controller, for example, the CA, inside the processor may perform message or data exchange with the non-transparent bridge by using the internal bus.

On a basis of introducing the non-transparent bridge, to coordinate with the mirroring operation of the target data, a mirror transaction may be introduced, and a packet related to the mirror transaction is configured. Further, an NTB may be used to implement memory address conversion, packet format conversion, determining on normal termination and abnormal termination of the mirror transaction, report interruption, and the like. The following provides detailed descriptions separately.

The packet related to the mirror transaction may be classified into a packet with a data payload (or referred to as a payload and corresponding to the foregoing target data) and a packet without a data payload. For example, the packet with a data payload may be referred to as a mirror packet, where the mirror packet may be used to mirror, to the memory address space of the second computer, a data payload to be written into the memory address space of the first computer. Further, a transaction number of a mirror transaction, a write address (the address is to be converted subsequently by using a non-transparent bridge, and for details, see below) of the data payload, and the data payload may be carried in the mirror packet.

Specifically, a transaction number of a mirroring operation in the mirror packet may be represented by an 8-bit binary number, and an address in the mirror packet may be determined according to specific implementation of the processor, for example, the address is a 46-bit to 48-bit binary number in X86. For example, a transaction number of the mirroring operation may be 0X01, which represents a mirror transaction with a number of 01; a mirror address may be OX001234.

The packet without a data payload may include, for example, a mirror completion packet or a mirror timeout packet. Such a packet may be used to improve logic of a mirroring operation. For example, the mirror completion packet may be used to indicate that the mirroring operation has been completed, and the mirror timeout packet may be used to indicate that the mirroring operation fails due to timeout. An address related to a mirroring operation, a mirror transaction number, or the like may also be carried in such a packet.

The following describes in detail an address conversion function and a packet conversion function of a non-transparent bridge by using a processor based on a QPI technology as an example.

First, assuming that the memory address space {0X04_0000, 0X04_FFFF} of the first processor and the memory address space {0X0A_0000, 0A_FFFF} of the second processor mirror each other (a mirror relationship may be preconfigured), an example of a procedure related to a mirror transaction is as follows:
Step 1: A CA in the first processor needs to write data into a memory address (for example, 0X04_1234). The CA may discover, according to a system configuration, that the memory address is an address in the mirror address space {0X04_0000, 0X04_FFFF} already matched with that of another system. Therefore, the CA not only sends a write packet with respect to the first processor, but also sends a mirror packet with respect to the mirror space. The write packet may be executed according to a normal write operation. The mirror packet may be sent to a non-transparent bridge and is processed by the non-transparent bridge of the first processor. It should be understood that this embodiment of the present invention imposes no specific limitation on a time sequence of an operation of sending the write packet by the CA and an operation of sending the mirror packet by the CA. For example, the CA may perform the foregoing operations at the same time, or may perform the foregoing operations successively.
Step 2: After receiving the mirror packet, the non-transparent bridge of the first processor may modify the address 0X04_1234 to 0X0A_1234 according to a mirror relationship between the foregoing memory address spaces, update the mirror packet, and send an updated mirror packet to a system bus interface (which, herein, may be a QPI port).
Step 3: The system bus interface of the first processor sends the updated mirror packet to a system bus interface of the second processor.
Step 4: The system bus interface of the second processor sends the mirror packet to a non-transparent bridge of the second processor.
Step 5: The non-transparent bridge of the second processor converts the mirror packet to a write packet and sends the write packet to a memory controller by using an internal bus of the second processor, to complete a corresponding memory write operation.
Step 6: The memory controller of the second processor returns a mirror write completion packet to the non-transparent bridge of the second processor after completing the memory write operation.
Step 7: The non-transparent bridge of the second processor modifies the address field 0X0A_1234 in the mirror write completion packet to 0X04_1234 according to the mirror relationship between the memory address spaces, and sends an updated packet to the system bus interface of the second processor.
Step 8: The system bus interface of the second processor sends the mirror completion packet to the system bus interface of the first processor.
Step 9: The system bus interface of the first processor sends the mirror completion packet to the non-transparent bridge of the first processor.
Step 10: The non-transparent bridge of the first processor sends, by using the internal bus of the first processor, the mirror completion packet to an initiator of the mirror packet, that is, the CA in step 1. Step 11: The CA receives the mirror completion packet, determines that a mirroring operation is successfully completed, terminates the transaction, and releases a corresponding resource.

In addition, a timer may be disposed on the non-transparent bridge of the first processor. When the mirror completion packet has not been received yet when the timer expires, a mirror timeout packet may be sent to the CA to indicate a failure of the mirroring operation.

It can be seen from the foregoing procedure that, a function of the NTB may include memory address conversion, packet or packet format conversion, determining on abnormal termination of a mirror transaction, report interruption, and the like.

On a basis of introducing the mirror packet and the non-transparent bridge, optionally, as an embodiment, step 340 may include: generating, by the first processor, a mirror packet according to the write request, where the mirror packet includes the target data and the write address, and the mirror packet is used to write the target data into a mirror address, of the write address, in the second memory address space; sending, by the first processor, the mirror packet to a non-transparent bridge of the first processor; converting, by the non-transparent bridge of the first processor, the write address in the mirror packet to the mirror address according to a mirror relationship between the first memory address space and the second memory address space, to obtain an updated mirror packet; and sending, by the non-transparent bridge of the first processor, the updated mirror packet to the second processor by using the system bus, so that the second processor writes the target data into the mirror address according to the updated mirror packet.

In an embodiment, the target data may be written into the first memory address space by using the write packet, the target data may be written into the second memory address space by using the mirror packet, a packet format of the write packet may differ from that of the mirror packet, and the first processor may perform corresponding transaction operations according to the formats of the write packet and the mirror packet. For example, the first processor performs a write operation on the write packet for the target data and writes the target data into the memory; the first processor performs a mirroring operation on the mirror packet, and mirrors the target data in the mirror packet to the second memory address space by using the system bus and the second processor.

It should be understood that formats and names of write packets generated by different types of processors may be different. In an example of an Intel processor supporting a QPI technology, a write packet generated by the processor may be referred to as a data write-back packet, that is, a WbData packet. When the system bus is a QPI bus, the write packet may be a WbData packet. To distinguish the mirror packet from a first write packet, the mirror packet may be referred to as a WbMir packet, where the write packet and the mirror packet may be in different packet formats. Optionally, as an embodiment, the method in FIG. 3 may further include: sending, by the non-transparent bridge of the first processor, a mirror completion packet to the first processor after the non-transparent bridge of the first processor receives the mirror completion packet from the second processor within a preset time, where the mirror completion packet is corresponding to the mirror packet and is used to indicate that the target data has been written into the mirror address; and confirming, by the first processor, a success of a mirroring operation for the target data according to the mirror completion packet, and terminating a mirror transaction corresponding to the mirroring operation.

Optionally, as an embodiment, the method in FIG. 3 may further include: sending, by the non-transparent bridge of the first processor, a mirror timeout packet to the first processor when the non-transparent bridge of the first processor does not receive the mirror completion packet from the second processor within the preset time; and confirming, by the first processor, a failure of the mirroring operation according to the mirror timeout packet, and terminating the mirror transaction. There may be multiple timeout determining manners. For example, when the updated mirror packet is sent to the second processor, a timer may be disposed on the non-transparent bridge of the first processor, and if the mirror completion packet has not been received yet after the timer expires, it is determined that the mirroring operation expires.

In this embodiment of the present invention, complete logic about performing a mirroring operation on a system bus is added to the first processor. The logic ensures that the mirroring operation herein is to be terminated regardless of a success or failure of the mirroring operation, which can avoid a system breakdown caused by a failure of a mirroring operation on a system bus. On this basis, brute-force surprise expansion of a system bus interface, for example, surprise expansion or surprise removal (surprise plug/surprise removal) of the system bus interface, of a processor inside a computer can be further supported. Specifically, in the prior art, multiple processors in a stand-alone system are also connected by using a system bus. For example, in a non-uniform memory access architecture (Non Uniform Memory Access Architecture, NUMA) system supporting cache coherence in the prior art, each processor may access a local memory, or may access a non-local memory by using a system bus, that is, memories of the multiple processors may be shared. However, a single operating system runs on the memories of such a multi-processor system, and in essence, the multi-processor system is still a stand-alone system instead of a cluster computer system. The operation performed between the multiple processors by using the system bus is still regarded in essence as an operation inside the stand-alone system. All operations on the system bus of the stand-along system are completed by hardware. Once an error occurs during an operation on a system bus of a processor (for example, brute-force surprise expansion occurs on the system bus interface), the error is a hardware error. The hardware error causes a breakdown of the stand-alone system. To avoid a system breakdown caused by an operation error on the system bus, complete logic about performing a mirroring operation on the system bus is added to the first processor. The logic ensures that the mirroring operation herein is to be terminated regardless of a success or failure of the mirroring operation; in this way, a system breakdown due to incompletion of or an error during an operation on a system bus can be avoided.

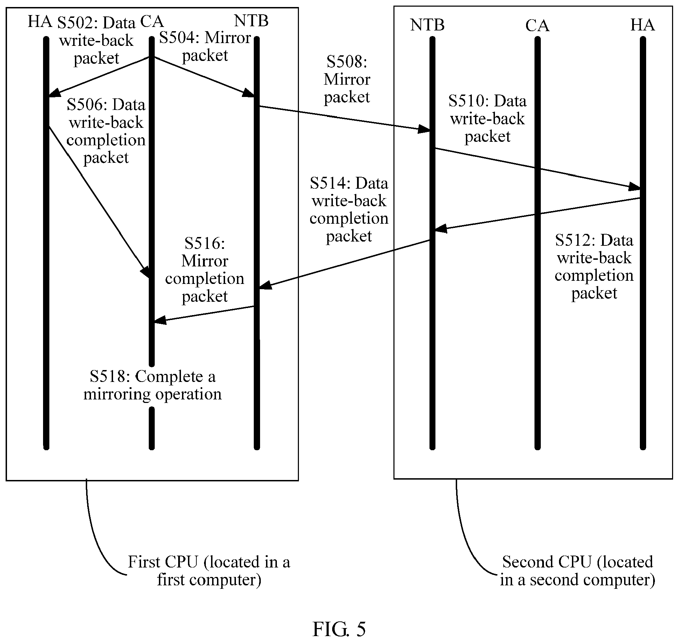

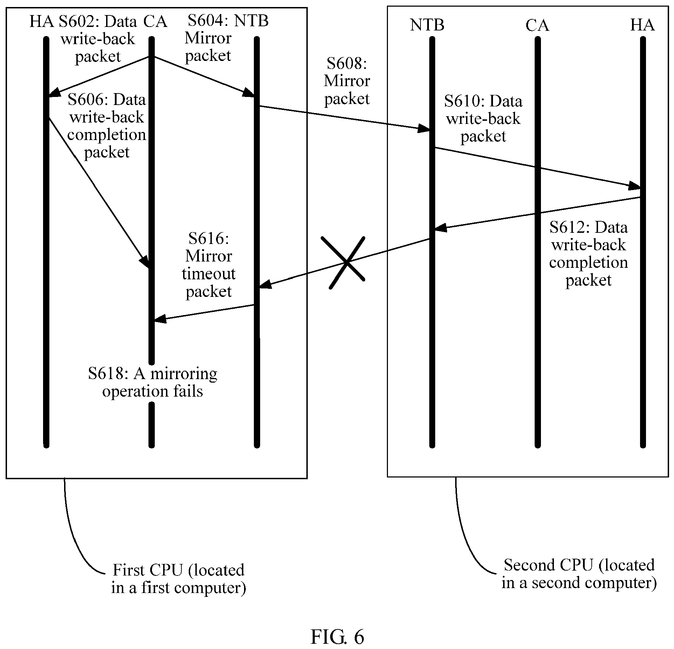

With reference to FIG. 5 and FIG. 6, the following describes in detail a process of a data mirroring operation between computers, connected by using a system bus, in a cluster computer system by using an example in which a processor is a processor supporting a QPI technology and the system bus is a QPI bus (for a specific structure, refer to FIG. 4). It should be understood that this embodiment of the present invention imposes no limitation on a time sequence of steps in FIG. 5 and FIG. 6, all steps in FIG. 5 and FIG. 6 may be performed in a sequence different from that shown in FIG. 5 and FIG. 6, and possibly, not all steps in FIG. 5 and FIG. 6 are necessary to be performed. A triggering condition of the mirroring operation process described in FIG. 5 and FIG. 6 may be: a CA in a first computer discovers that a write address of a write request received by the CA is located in a mirror address space (corresponding to the foregoing first memory address space) of a memory of the first computer, where the mirror address space may be preconfigured.

S502: A CA of a first CPU generates a data write-back packet (WbData) and sends the write packet to an HA of the first CPU, where the write packet includes target data to be written into a memory. S504: The CA of the first CPU generates a mirror packet (WbMir) and sends the mirror packet to a non-transparent bridge of the first CPU, where the mirror packet includes the target data to be written into the memory.

Specifically, formats of the data write-back packet and the mirror packet may be different, so that the processor determines, according to packet formats, subsequent operation types corresponding to packets in different formats. For example, a write operation is performed on the data write-back packet, and a mirroring operation is performed on the mirror packet. Step S502 and step S504 may be performed at the same time, or either of step S502 and step S504 is performed first.

S506: The HA of the first CPU writes the target data into a DDR memory of the first computer after receiving the data write-back packet, and returns a data write-back completion packet to the CA. S508: The non-transparent bridge of the first CPU sends the mirror packet to a non-transparent bridge of a second CPU after receiving the mirror packet.

A non-transparent bridge may be located at a system bus interface of a CPU, and transmission between non-transparent bridges may be completed by using a QPI interface and a QPI bus between CPUs.

S510: The non-transparent bridge of the second CPU converts the mirror packet to a data write-back packet after receiving the mirror packet, and sends the data write-back packet to an HA inside the second CPU, where the data write-back packet includes the target data.

S512: The HA of the second CPU writes the target data into a DDR memory of a second computer after receiving the data write-back packet, and returns a data write-back completion packet to the non-transparent bridge of the second CPU.

It should be understood that a memory address space, of the second computer, into which the target data is written and the first memory address space of the first computer are mutual mirror address spaces of each other.

S514: The non-transparent bridge of the second CPU sends a data write-back completion packet to the non-transparent bridge of the first CPU after write-back of received data is completed. Specifically, a QPI bus between non-transparent bridge modules may be used to complete transferring of the data write-back completion packet.

S516: The non-transparent bridge of the first CPU converts the received data write-back completion packet to a mirror completion packet (MirCMP) and sends the mirror completion packet to the CA of the first CPU.

S518: The CA of the first CPU confirms, after receiving the data write-back completion packet in S506 and the mirror completion packet in S516, that the target data has been written into memory address spaces, which mirror each other, of the first computer and the second computer separately, and terminates a mirror transaction.

The CA of the first CPU may notify an upper-layer application of completion of the mirror transaction, or notify an upper-layer application of a success of the mirroring operation.

According to this embodiment of the present invention, processors of computers are connected by using a QPI bus, and a set of mirroring operation procedures is designed based on the QPI bus. The QPI bus is a system bus and has advantages of low latency and high bandwidth, and therefore, can improve efficiency of a data mirroring operation.

In practice, the mirroring operation cannot be always terminated successfully. A failure of a mirroring operation may be caused due to a fault in a system bus interface or brute-force surprise expansion (surprise expansion or surprise removal) of a CPU or a bus cable between two hosts. To ensure that a success or failure of the mirroring operation does not affect processing of another transaction in the entire system, an embodiment of the present invention provides a manner of processing abnormal termination of a mirroring operation. For details, refer to FIG. 6.

S602, S604, S608, S610, and S612 in FIG. 6 are respectively similar to S502, S504, S508, S510, and S512 in FIG. 5, and details are not described herein again.

S616: The non-transparent bridge of the first CPU sends a mirror timeout packet to the CA of the first CPU if the non-transparent bridge of the first CPU does not receive, after a timer expires, the data write-back completion packet sent by the non-transparent bridge of the second CPU. Specifically, the timer may be disposed on the non-transparent bridge of the first CPU when S608 is performed, and a timing length may be set according to an experiment or experience.

S618: The CA of the first CPU confirms a failure of the mirroring operation (TranFail) after receiving the mirror timeout packet, and terminates the mirroring operation.

The CA may report a result about the failure of the mirroring operation to an operating system, and the operating system keeps a log related to the failure of the mirroring operation.

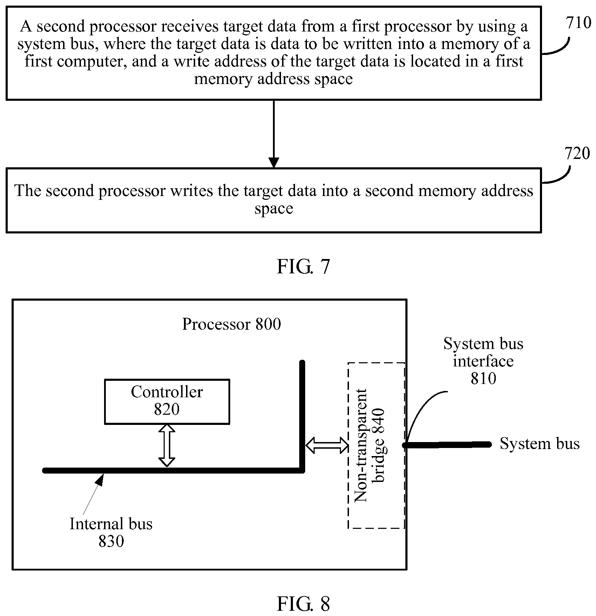

With reference to FIG. 2 to FIG. 6, the foregoing describes in detail a write request processing method in a cluster computer system according to the embodiments of the present invention from a perspective of a first processor. The following will describe, with reference to FIG. 7, a write request processing method in a cluster computer system according to an embodiment of the present invention from a perspective of a second processor. It should be understood that interaction between a first processor and the second processor, related features, functions and the like described on the second processor side are corresponding to the descriptions on the first processor side. For ease of conciseness, repeated descriptions are omitted properly.

FIG. 7 is a schematic flowchart of a write request processing method according to an embodiment of the present invention. The method in FIG. 7 may be executed by the second processor in FIG. 2. The method in FIG. 7 includes:
710: The second processor receives target data from a first processor by using a system bus, where the target data is data to be written into a memory of a first computer, and a write address of the target data is located in a first memory address space.
720: The second processor writes the target data into a second memory address space.

In an embodiment, the second processor may directly write the target data into the first memory address space; in another embodiment, the second processor may write the target data into the first memory address space by using a memory controller.

In this embodiment of the present invention, processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

Optionally, as an embodiment, step 710 may include: receiving, by a non-transparent bridge of the second processor, a mirror packet from the first processor by using the system bus, where the mirror packet includes the target data and a mirror address, of the write address, in the second memory address space; and the writing, by the second processor, the target data into a second memory address space includes: converting, by the non-transparent bridge of the second processor, the mirror packet to a write packet for the target data; and writing, by the non-transparent bridge of the second processor, the write packet into the mirror address in the second memory address space by using the memory controller of the second computer.

Optionally, as an embodiment, the method in FIG. 7 may further include: receiving, by the non-transparent bridge of the second processor from the memory controller, a write completion packet corresponding to the write packet, where the write completion packet includes the mirror address; converting, by the non-transparent bridge of the second processor, the mirror address to the write address according to a mapping relationship between the first memory address space and the second memory address space; and sending, by the non-transparent bridge of the second processor, a mirror completion packet corresponding to the mirror packet to the first processor, where the mirror completion packet includes the write address, and the mirror completion packet is used to indicate that the target data has been written into the mirror address.

Optionally, as an embodiment, the system bus is a QPI bus or an HT bus.

It should be understood that in some of the foregoing embodiments, a non-transparent bridge of the first processor is responsible for converting the write address in the mirror packet to the mirror address (the mirror address is an address, corresponding to the write address, in the second memory address space); the non-transparent bridge of the second processor is responsible for converting the mirror packet to a write packet that can be recognized by the second processor. However, this embodiment of the present invention is not limited thereto. In practice, the non-transparent bridge of the second processor may be not only responsible for address conversion but also responsible for packet conversion. Similarly, in some of the foregoing embodiments, the non-transparent bridge of the second processor is responsible for converting the mirror address in the write completion packet to the write address, and the non-transparent bridge of the first processor is responsible for converting the write completion packet to the mirror completion packet. However, this embodiment of the present invention is not limited thereto either. In practice, the non-transparent bridge of the first processor may be not only responsible for address conversion but also responsible for packet conversion.

It should be further understood that the a non-transparent bridge of a processor may be responsible for a mirror-related operation such as packet conversion or conversion of an address in a packet, and the other operations or functions (such as operations of generating a write packet and a mirror packet, a data write operation, and an operation of sending the mirror packet to the non-transparent bridge) may be performed by a processor body, for example, performed by a controller or control logic of the processor. In an example of a CPU supporting a QPI technology, the processor body herein may be a processing engine such as a CA or an HA of the CPU.

With reference to FIG. 2 to FIG. 7, the foregoing describes in detail a write request processing method in a cluster computer system according to the embodiments of the present invention. The following will describe in detail, with reference to FIG. 8 to FIG. 11, a processor and a computer according to embodiments of the present invention.

FIG. 8 is a schematic structural diagram of a processor according to an embodiment of the present invention. The processor 800 in FIG. 8 can implement all the steps, performed by the first processor, in FIG. 1 to FIG. 7. To avoid repetition, details are not described herein again. The processor 800 is located in a first computer, where the first computer is connected to a second computer, respective operating systems run on the first computer and the second computer respectively, the second computer includes another processor, the processor 800 includes a system bus interface 810, the system bus interface of the processor 800 is connected to a system bus interface of the another processor by using a system bus, a second memory address space of the second computer is a mirror address space of a first memory address space of the first computer, the processor 800 further includes a controller 820 and an internal bus 830, and the controller 820 is connected to the system bus interface 810 of the processor 800 by using the internal bus 830.

The controller 820 is configured to receive a write request, where the write request includes to-be-written target data and a write address of the target data; determine that the write address is located in the first memory address space; and write the target data in the write request into the first memory address space, and send the target data in the write request to the another processor by using the system bus, so that the another processor writes the target data into the second memory address space.

In this embodiment of the present invention, processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

Optionally, as an embodiment, the processor 800 may further include a non-transparent bridge 840, where the non-transparent bridge 840 is connected to the system bus interface 810, and the non-transparent bridge 840 is connected to the controller 820 by using the internal bus 830; the controller 820 is specifically configured to generate a mirror packet according to the write request, where the mirror packet includes the target data and the write address, and the mirror packet is used to write the target data into a mirror address, of the write address, in the second memory address space; and send the mirror packet to the non-transparent bridge; and the non-transparent bridge 840 is configured to convert the write address in the mirror packet to the mirror address according to a mirror relationship between the first memory address space and the second memory address space, to obtain an updated mirror packet; and send the updated mirror packet to a non-transparent bridge of the another processor by using the system bus, so that the another processor writes the target data into the mirror address according to the updated mirror packet received by the non-transparent bridge of the another processor.

Optionally, as an embodiment, the non-transparent bridge 840 is further configured to send a mirror completion packet to the controller 820 after receiving the mirror completion packet from the another processor within a preset time, where the mirror completion packet is corresponding to the mirror packet and is used to indicate that the target data has been written into the mirror address; and the controller 820 is further configured to confirm a success of a mirroring operation for the target data according to the mirror completion packet, and terminate a mirror transaction corresponding to the mirroring operation.

Optionally, as an embodiment, the non-transparent bridge 840 is further configured to send a mirror timeout packet to the controller 820 when the mirror completion packet is not received from the another processor within the preset time; and the controller 820 is further configured to confirm a failure of the mirroring operation according to the mirror timeout packet, and terminate the mirror transaction.

Optionally, as an embodiment, the controller 820 is specifically configured to generate a mirror packet according to the write request, where the mirror packet includes the target data and the write address; and send the mirror packet to a non-transparent bridge of the processor, where the non-transparent bridge of the processor sends the mirror packet to a non-transparent bridge of the another processor by using the system bus, so that the non-transparent bridge of the another processor converts the write address in the mirror packet to a mirror address, of the write address, in the second memory address space, to obtain an updated mirror packet, and the another processor writes the target data into the mirror address according to the updated mirror packet.

Optionally, as an embodiment, the controller is specifically configured to generate a write packet for the target data according to the write request; and write the target data into the write address in the first memory address space according to the write packet.

Optionally, as an embodiment, the system bus is a QPI bus or an HT bus.

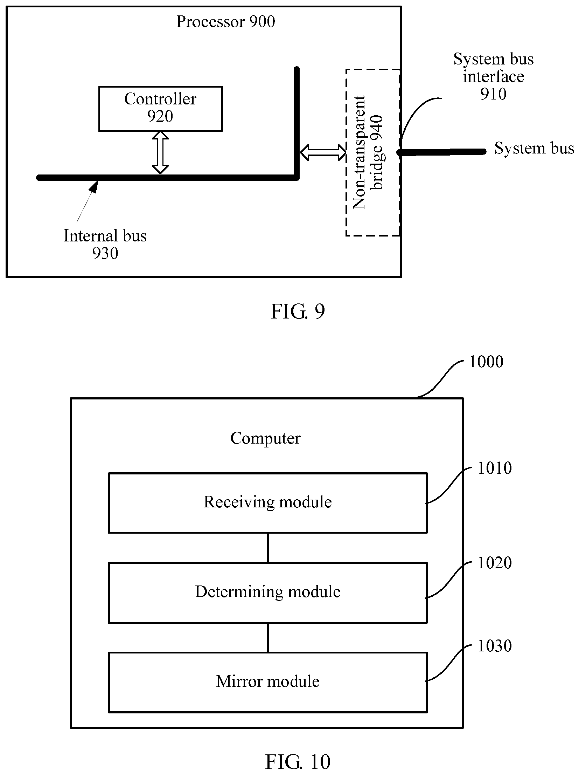

FIG. 9 is a schematic structural diagram of a processor according to an embodiment of the present invention. The processor 900 in FIG. 9 can implement all the steps, performed by the second processor, in FIG. 1 to FIG. 7. To avoid repetition, details are not described herein again. The processor 900 is located in a second computer connected to a first computer, respective operating systems run on the first computer and the second computer respectively, the first computer includes another processor, the processor 900 includes a system bus interface 910, a system bus interface of the another processor is connected to the system bus interface of the processor by using a system bus, a second memory address space of the second computer is a mirror address space of a first memory address space of the first computer, the processor 900 includes a controller 920, an internal bus 930, and a non-transparent bridge 940, the non-transparent bridge 930 is connected to the system bus interface 910 of the processor 900, and the controller 920 is connected to the non-transparent bridge 940 by using the internal bus 930.

The non-transparent bridge 940 is configured to: receive target data from the another processor by using the system bus, where the target data is data to be written into a memory of the another processor, and a write address of the target data is located in the first memory address space; and write the target data into the second memory address space.

In this embodiment of the present invention, processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

Optionally, as an embodiment, the non-transparent bridge 940 is specifically configured to receive a mirror packet from the another processor by using the system bus, where the mirror packet includes the target data and a mirror address, of the write address, in the second memory address space; convert the mirror packet to a write packet for the target data; and write the write packet into the mirror address in the second memory address space by using a memory controller of the second computer.

Optionally, as an embodiment, the non-transparent bridge 940 is further configured to receive, from the memory controller, a write completion packet corresponding to the write packet, where the write completion packet includes the mirror address; convert the mirror address to the write address according to a mapping relationship between the first memory address space and the second memory address space; and send, to the another processor, a mirror completion packet corresponding to the mirror packet, where the mirror completion packet includes the write address, and the mirror completion packet is used to indicate that the target data has been written into the mirror address.

Optionally, as an embodiment, the system bus is a QPI bus or an HT bus.

FIG. 10 is a schematic structural diagram of a computer according to an embodiment of the present invention. The computer 1000 in FIG. 10 is corresponding to the first computer in FIG. 1 to FIG. 7 and can implement all the steps performed by the first processor. To avoid repetition, details are not described herein again. The computer 1000 is connected to another computer, respective operating systems run on the computer 1000 and the another computer respectively, the computer 1000 includes a first processor, and the another computer includes a second processor, both the first processor and the second processor include a system bus interface, the system bus interface of the first processor is connected to the system bus interface of the second processor by using a system bus, and a second memory address space of the another computer is a mirror address space of a first memory address space of the computer.

The computer 1000 includes:
a receiving module 1010, configured to receive a write request, where the write request includes to-be-written target data and a write address of the target data;
a determining module 1020, configured to determine that the write address is located in the first memory address space; and
a mirroring module 1030, configured to write the target data in the write request into the first memory address space, and send the target data in the write request to the second processor by using the system bus, so that the second processor writes the target data into the second memory address space.

In this embodiment of the present invention, processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

Optionally, as an embodiment, the mirroring module 1030 is specifically configured to generate a mirror packet according to the write request, where the mirror packet includes the target data and the write address, and the mirror packet is used to write the target data into a mirror address, of the write address, in the second memory address space; send the mirror packet to a non-transparent bridge of the first processor; convert the write address in the mirror packet to the mirror address according to a mirror relationship between the first memory address space and the second memory address space, to obtain an updated mirror packet; and send the updated mirror packet to a non-transparent bridge of the second processor by using the system bus, so that the second processor writes the target data into the mirror address according to the updated mirror packet received by the non-transparent bridge of the second processor.

Optionally, as an embodiment, the mirroring module 1030 is further configured to: send a mirror completion packet to the first processor after the non-transparent bridge of the first processor receives the mirror completion packet from the second processor within a preset time, where the mirror completion packet is corresponding to the mirror packet and is used to indicate that the target data has been written into the mirror address; and confirm a success of a mirroring operation for the target data according to the mirror completion packet, and terminate a mirror transaction corresponding to the mirroring operation.

Optionally, as an embodiment, the mirroring module 1030 is further configured to: send a mirror timeout packet to the first processor when the non-transparent bridge of the first processor does not receive the mirror completion packet from the second processor within the preset time; and confirm a failure of the mirroring operation according to the mirror timeout packet, and terminate the mirror transaction.

Optionally, as an embodiment, the mirroring module 1030 is further configured to generate a mirror packet according to the write request, where the mirror packet includes the target data and the write address; and send the mirror packet to a non-transparent bridge of the first processor, where the non-transparent bridge of the first processor sends the mirror packet to a non-transparent bridge of the second processor by using the system bus, so that the non-transparent bridge of the second processor converts the write address in the mirror packet to a mirror address, of the write address, in the second memory address space, to obtain an updated mirror packet, and the second processor writes the target data into the mirror address according to the updated mirror packet.

Optionally, as an embodiment, the mirroring module 1030 is specifically configured to generate a write packet for the target data according to the write request; and write the target data into the write address in the first memory address space according to the write packet.

Optionally, as an embodiment, the system bus is a QPI bus or an HT bus.

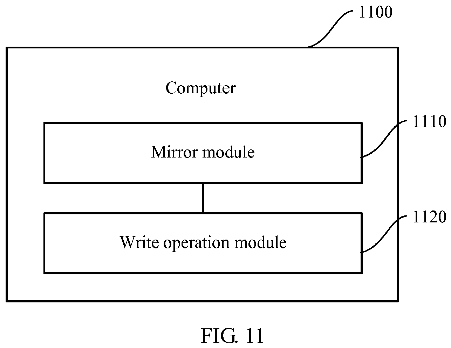

FIG. 11 is a schematic block diagram of a computer according to an embodiment of the present invention. The computer 1100 in FIG. 11 is corresponding to the second computer in FIG. 1 to FIG. 7 and can implement all the steps performed by the second processor of the second computer. To avoid repetition, details are not described herein again. The computer 1100 is connected to another computer, respective operating systems run on the another computer and the computer 1100 respectively, the another computer includes a first processor, the computer 1100 includes a second processor, both the first processor and the second processor include a system bus interface, the system bus interface of the first processor is connected to the system bus interface of the second processor by using a system bus, and a second memory address space of the computer 1100 is a mirror address space of a first memory address space of the another computer.

The computer 1100 includes:
a mirroring module 1110, configured to receive target data from the first processor by using the system bus, where the target data is data to be written into a memory of the first processor, and a write address of the target data is located in the first memory address space; and
a write operation module 1120, configured to write the target data into the second memory address space.

In this embodiment of the present invention, processors of two different computers are connected together by using a system bus. The system bus is used to implement a mirroring operation of to-be-written data, without requiring multiple DMA operations like that in the prior art or without complex protocol-based conversion, which reduces mirroring operation latency and improves IOPS performance of a system.

Optionally, as an embodiment, the mirroring module 1110 is specifically configured to receive a mirror packet from the first processor by using the system bus, where the mirror packet includes the target data and a mirror address, of the write address, in the second memory address space; and the write operation module is specifically configured to convert the mirror packet to a write packet for the target data, and write the write packet into the mirror address in the second memory address space by using a memory controller of the computer.

Optionally, as an embodiment, the mirroring module 1110 is further configured to receive, from the memory controller, a write completion packet corresponding to the write packet, where the write completion packet includes the mirror address; convert the mirror address to the write address according to a mapping relationship between the first memory address space and the second memory address space; and send, to the first processor, a mirror completion packet corresponding to the mirror packet, where the mirror completion packet includes the write address, and the mirror completion packet is used to indicate that the target data has been written into the mirror address.

Optionally, as an embodiment, the system bus is a QPI bus or an HT bus.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A write request processing method, applied to a first computer, wherein the first computer is connected to a second computer, respective operating systems run on the first computer and the second computer respectively, the first computer comprises a first processor, the second computer comprises a second processor, both the first processor and the second processor comprise a system bus interface, the system bus interface of the first processor is connected to the system bus interface of the second processor by using a system bus, and a second memory address space of the second computer is a mirror address space of a first memory address space of the first computer; and
the method comprises:
receiving, by the first processor, a write request, wherein the write request comprises to-be-written target data and a write address of the target data;
determining, by the first processor, that the write address is located in the first memory address space; and
writing, by the first processor, the target data in the write request into the first memory address space, and sending the target data in the write request to the second processor by using the system bus, so that the second processor writes the target data into the second memory address space.

2. The method according to claim 1, wherein the sending, by the first processor, the target data in the write request to the second processor by using the system bus comprises:
generating, by the first processor, a mirror packet according to the write request, wherein the mirror packet comprises the target data and the write address;
sending, by the first processor, the mirror packet to a non-transparent bridge of the first processor;
converting, by the non-transparent bridge of the first processor, the write address in the mirror packet to a mirror address, of the write address, in the second memory address space according to a mirror relationship between the first memory address space and the second memory address space, to obtain an updated mirror packet; and
sending, by the non-transparent bridge of the first processor, the updated mirror packet to a non-transparent bridge of the second processor by using the system bus, so that the second processor writes the target data into the mirror address according to the updated mirror packet received by the non-transparent bridge of the second processor.

3. The method according to claim 2, wherein the method further comprises:
sending, by the non-transparent bridge of the first processor, a mirror completion packet to the first processor after the non-transparent bridge of the first processor receives the mirror completion packet from the second processor within a preset time, wherein the mirror completion packet is corresponding to the mirror packet and is used to indicate that the target data has been written into the mirror address; and
confirming, by the first processor, a success of a mirroring operation for the target data according to the mirror completion packet, and terminating a mirror transaction corresponding to the mirroring operation.

4. The method according to claim 3, wherein the method further comprises:
sending, by the non-transparent bridge of the first processor, a mirror timeout packet to the first processor when the non-transparent bridge of the first processor does not receive the mirror completion packet from the second processor within the preset time; and
confirming, by the first processor, a failure of the mirroring operation according to the mirror timeout packet, and terminating the mirror transaction.

5. The method according to claim 1, wherein the sending, by the first processor, the target data in the write request to the second processor by using the system bus comprises:
generating, by the first processor, a mirror packet according to the write request, wherein the mirror packet comprises the target data and the write address; and
sending, by the first processor, the mirror packet to a non-transparent bridge of the first processor, wherein the non-transparent bridge of the first processor sends the mirror packet to a non-transparent bridge of the second processor by using the system bus, so that the non-transparent bridge of the second processor converts the write address in the mirror packet to a mirror address, of the write address, in the second memory address space, to obtain an updated mirror packet, and the second processor writes the target data into the mirror address according to the updated mirror packet.

6. The method according to any one of claims 1 to 5, wherein the writing, by the first processor, the target data in the write request into the first memory address space comprises:
generating, by the first processor, a write packet for the target data according to the write request; and
writing, by the first processor, the target data into the write address in the first memory address space according to the write packet.

7. The method according to any one of claims 1 to 6, wherein the system bus is a quick path interconnect QPI bus or HyperTransport HT bus.

8. A write request processing method, wherein the method is applied to a second computer connected to a first computer, respective operating systems run on the first computer and the second computer respectively, the first computer comprises a first processor, the second computer comprises a second processor, both the first processor and the second processor comprise a system bus interface, the system bus interface of the first processor is connected to the system bus interface of the second processor by using a system bus, and a second memory address space of the second computer is a mirror address space of a first memory address space of the first computer; and
the method comprises:
receiving, by the second processor, target data from the first processor by using the system bus, wherein the target data is data to be written into a memory of the first processor, and a write address of the target data is located in the first memory address space; and
writing, by the second processor, the target data into the second memory address space.

9. The method according to claim 8, wherein the receiving, by the second processor, target data from the first processor by using the system bus comprises:
receiving, by a non-transparent bridge of the second processor, a mirror packet from the first processor by using the system bus, wherein the mirror packet comprises the target data and a mirror address, of the write address, in the second memory address space; and
the writing, by the second processor, the target data into the second memory address space comprises:
converting, by the non-transparent bridge of the second processor, the mirror packet to a write packet for the target data; and
writing, by the non-transparent bridge of the second processor, the write packet into the mirror address in the second memory address space by using a memory controller of the second computer.

10. The method according to claim 9, wherein the method further comprises:
receiving, by the non-transparent bridge of the second processor, from the memory controller, a write completion packet corresponding to the write packet, wherein the write completion packet comprises the mirror address;
converting, by the non-transparent bridge of the second processor, the mirror address to the write address according to a mapping relationship between the first memory address space and the second memory address space; and
sending, by the non-transparent bridge of the second processor, a mirror completion packet corresponding to the mirror packet to the first processor, wherein the mirror completion packet comprises the write address, and the mirror completion packet is used to indicate that the target data has been written into the mirror address.

11. The method according to claim 8, wherein the receiving, by the second processor, target data from the first processor by using the system bus comprises:
receiving, by a non-transparent bridge of the second processor, a mirror packet from the first processor by using the system bus, wherein the mirror packet comprises the target data and the write address; and
the writing, by the second processor, the target data into the second memory address space comprises:
converting, by the non-transparent bridge of the second processor, the mirror packet to a write packet for the target data, and converting the write address to a mirror address, of the write address, in the second memory address space; and
writing, by the non-transparent bridge of the second processor, the write packet into the mirror address in the second memory address space by using a memory controller of the second computer.

12. The method according to any one of claims 8 to 11, wherein the system bus is a quick path interconnect QPI bus or HyperTransport HT bus.

13. A processor, wherein the processor is located in a first computer, the first computer is connected to a second computer, respective operating systems run on the first computer and the second computer respectively, the second computer comprises another processor, both the processor and the another processor comprise a system bus interface, the system bus interface of the processor is connected to the system bus interface of the another processor by using a system bus, a second memory address space of the second computer is a mirror address space of a first memory address space of the first computer, the processor further comprises a controller and an internal bus, and the controller is connected to the system bus interface of the processor by using the internal bus; and
the controller is configured to receive a write request, wherein the write request comprises to-be-written target data and a write address of the target data; determine that the write address is located in the first memory address space; and write the target data in the write request into the first memory address space, and send the target data in the write request to the another processor by using the system bus, so that the another processor writes the target data into the second memory address space.

14. The processor according to claim 13, wherein the processor further comprises a non-transparent bridge, wherein the non-transparent bridge is connected to the system bus interface, and the non-transparent bridge is connected to the controller by using the internal bus;
the controller is specifically configured to generate a mirror packet according to the write request, wherein the mirror packet comprises the target data and the write address; and
the non-transparent bridge is configured to convert the write address in the mirror packet to a mirror address, of the write address, in the second memory address space according to a mirror relationship between the first memory address space and the second memory address space, to obtain an updated mirror packet; and send the updated mirror packet to a non-transparent bridge of the another processor by using the system bus, so that the another processor writes the target data into the mirror address according to the updated mirror packet received by the non-transparent bridge of the another processor.

15. The processor according to claim 14, wherein the non-transparent bridge is further configured to send a mirror completion packet to the controller after receiving the mirror completion packet from the another processor within a preset time, wherein the mirror completion packet is corresponding to the mirror packet and is used to indicate that the target data has been written into the mirror address; and
the controller is further configured to confirm a success of a mirroring operation for the target data according to the mirror completion packet, and terminate a mirror transaction corresponding to the mirroring operation.

16. The processor according to claim 15, wherein the non-transparent bridge is further configured to send a mirror timeout packet to the controller when the mirror completion packet is not received from the another processor within the preset time; and
the controller is further configured to confirm a failure of the mirroring operation according to the mirror timeout packet, and terminate the mirror transaction.

17. The processor according to claim 13, wherein the controller is specifically configured to generate a mirror packet according to the write request, wherein the mirror packet comprises the target data and the write address; and send the mirror packet to a non-transparent bridge of the processor, wherein the non-transparent bridge of the processor sends the mirror packet to a non-transparent bridge of the another processor by using the system bus, so that the non-transparent bridge of the another processor converts the write address in the mirror packet to a mirror address, of the write address, in the second memory address space, to obtain an updated mirror packet, and the another processor writes the target data into the mirror address according to the updated mirror packet.

18. The processor according to any one of claims 13 to 17, wherein the controller is specifically configured to generate a write packet for the target data according to the write request; and write the target data into the write address in the first memory address space according to the write packet.

19. The processor according to any one of claims 13 to 18, wherein the system bus is a quick path interconnect QPI bus or HyperTransport HT bus.

20. A processor, wherein the processor is located in a second computer connected to a first computer, respective operating systems run on the first computer and the second computer respectively, the first computer comprises another processor, both the another processor and the processor comprise a system bus interface, the system bus interface of the another processor is connected to the system bus interface of the processor by using a system bus, a second memory address space of the second computer is a mirror address space of a first memory address space of the first computer, the processor comprises a controller, a non-transparent bridge, and an internal bus, the non-transparent bridge is connected to the system bus interface of the processor, and the controller is connected to the non-transparent bridge by using the internal bus; and
the non-transparent bridge is configured to receive target data from the another processor by using the system bus, wherein the target data is data to be written into a memory of the another processor, and a write address of the target data is located in the first memory address space; and write the target data into the second memory address space.

21. The processor according to claim 20, wherein the non-transparent bridge is specifically configured to receive a mirror packet from the another processor by using the system bus, wherein the mirror packet comprises the target data and a mirror address, of the write address, in the second memory address space; convert the mirror packet to a write packet for the target data; and write the write packet into the mirror address in the second memory address space by using a memory controller of the second computer.

22. The processor according to claim 21, wherein the non-transparent bridge is further configured to receive, from the memory controller, a write completion packet corresponding to the write packet, wherein the write completion packet comprises the mirror address; convert the mirror address to the write address according to a mapping relationship between the first memory address space and the second memory address space; and send, to the another processor, a mirror completion packet corresponding to the mirror packet, wherein the mirror completion packet comprises the write address, and the mirror completion packet is used to indicate that the target data has been written into the mirror address.

23. The processor according to claim 20, wherein the non-transparent bridge is specifically configured to receive a mirror packet from the another processor by using the system bus, wherein the mirror packet comprises the target data and the write address; convert the mirror packet to a write packet for the target data, and convert the write address to a mirror address, of the write address, in the second memory address space; and write the write packet into the mirror address in the second memory address space by using a memory controller of the second computer.

24. The processor according to any one of claims 20 to 23, wherein the system bus is a quick path interconnect QPI bus or HyperTransport HT bus.

25. A computer, wherein the computer is connected to another computer, respective operating systems run on the computer and the another computer respectively, the computer comprises a first processor, the another computer comprises a second processor, both the first processor and the second processor comprise a system bus interface, the system bus interface of the first processor is connected to the system bus interface of the second processor by using a system bus, and a second memory address space of the another computer is a mirror address space of a first memory address space of the computer; and
the computer comprises:
a receiving module, configured to receive a write request, wherein the write request comprises to-be-written target data and a write address of the target data;
a determining module, configured to determine that the write address is located in the first memory address space; and
a mirroring module, configured to write the target data in the write request into the first memory address space, and send the target data in the write request to the second processor by using the system bus, so that the second processor writes the target data into the second memory address space.

26. The computer according to claim 25, wherein the mirroring module is specifically configured to generate a mirror packet according to the write request, wherein the mirror packet comprises the target data and the write address; send the mirror packet to a non-transparent bridge of the first processor; convert the write address in the mirror packet to a mirror address, of the write address, in the second memory address space according to a mirror relationship between the first memory address space and the second memory address space, to obtain an updated mirror packet; and send the updated mirror packet to a non-transparent bridge of the second processor by using the system bus, so that the second processor writes the target data into the mirror address according to the updated mirror packet received by the non-transparent bridge of the second processor.

27. The computer according to claim 26, wherein the mirroring module is further configured to:
send a mirror completion packet to the first processor after the non-transparent bridge of the first processor receives the mirror completion packet from the second processor within a preset time, wherein the mirror completion packet is corresponding to the mirror packet and is used to indicate that the target data has been written into the mirror address; and confirm a success of a mirroring operation for the target data according to the mirror completion packet, and terminate a mirror transaction corresponding to the mirroring operation.

28. The computer according to claim 27, wherein the mirroring module is further configured to:
send a mirror timeout packet to the first processor when the non-transparent bridge of the first processor does not receive the mirror completion packet from the second processor within the preset time; and confirm a failure of the mirroring operation according to the mirror timeout packet, and terminate the mirror transaction.

29. The computer according to claim 25, wherein the mirroring module is further configured to generate a mirror packet according to the write request, wherein the mirror packet comprises the target data and the write address; and send the mirror packet to a non-transparent bridge of the first processor, wherein the non-transparent bridge of the first processor sends the mirror packet to a non-transparent bridge of the second processor by using the system bus, so that the non-transparent bridge of the second processor converts the write address in the mirror packet to a mirror address, of the write address, in the second memory address space, to obtain an updated mirror packet, and the second processor writes the target data into the mirror address according to the updated mirror packet.

30. The computer according to any one of claims 25 to 29, wherein the mirroring module is specifically configured to generate a write packet for the target data according to the write request; and write the target data into the write address in the first memory address space according to the write packet.

31. The computer according to any one of claims 25 to 30, wherein the system bus is a quick path interconnect QPI bus or HyperTransport HT bus.

32. A computer, wherein the computer is connected to another computer, respective operating systems run on the another computer and the computer respectively, the another computer comprises a first processor, the computer comprises a second processor, both the first processor and the second processor comprise a system bus interface, the system bus interface of the first processor is connected to the system bus interface of the second processor by using a system bus, and a second memory address space of the computer is a mirror address space of a first memory address space of the another computer; and
the computer comprises:
a mirroring module, configured to receive target data from the first processor by using the system bus, wherein the target data is data to be written into a memory of the first processor, and a write address of the target data is located in the first memory address space; and
a write operation module, configured to write the target data into the second memory address space.

33. The computer according to claim 32, wherein the mirroring module is specifically configured to receive a mirror packet from the first processor by using the system bus, wherein the mirror packet comprises the target data and a mirror address, of the write address, in the second memory address space; and the write operation module is specifically configured to convert the mirror packet to a write packet for the target data, and write the write packet into the mirror address in the second memory address space by using a memory controller of the computer.

34. The computer according to claim 33, wherein the mirroring module is further configured to receive, from the memory controller, a write completion packet corresponding to the write packet, wherein the write completion packet comprises the mirror address; convert the mirror address to the write address according to a mapping relationship between the first memory address space and the second memory address space; and send, to the first processor, a mirror completion packet corresponding to the mirror packet, wherein the mirror completion packet comprises the write address, and the mirror completion packet is used to indicate that the target data has been written into the mirror address.

35. The computer according to claim 32, wherein the mirroring module is specifically configured to receive a mirror packet from the first processor by using the system bus, wherein the mirror packet comprises the target data and the write address; and the write operation module is specifically configured to convert the mirror packet to a write packet for the target data, and convert the write address to a mirror address, of the write address, in the second memory address space; and write the write packet into the mirror address in the second memory address space by using a memory controller of the second computer.

36. The computer according to any one of claims 32 to 35, wherein the system bus is a quick path interconnect QPI bus or HyperTransport HT bus.
